# EUROPEAN PATENT SPECIFICATION

(11) **EP 3 915 780 B1**
(45) Date of publication and mention of the grant of the patent: **24.08.2022**
(21) Application number: 20177070.8
(22) Date of filing: 28.05.2020
(51) Int. Cl.: B32B 17/10

(54) **MULTI-LAYER GLASS PLATE FOR MOTOR-VEHICLE WINDOW PANES, AND MOTOR-VEHICLE EQUIPPED THEREWITH**
MEHRSCHICHTIGE GLASPLATTE FÜR KRAFTFAHRZEUGFENSTERSCHEIBEN UND KRAFTFAHRZEUG DAMIT
PLAQUE DE VERRE MULTICOUCHE POUR VITRES DE FENÊTRE DE VÉHICULE À MOTEUR ET VÉHICULE À MOTEUR ÉQUIPÉ DE CELLE-CI

(43) Date of publication of application: 01.12.2021
(73) Proprietor: C.R.F. Società Consortile per Azioni, 10043 Orbassano (Torino) (IT)
(72) Inventor: BALDARELLI, Luigi, 10043 Orbassano (Torino) (IT); LI PIRA, Nello, 10043 Orbassano (Torino) (IT); SCAFFIDI MUTA, Fabio, 10043 Orbassano (Torino) (IT)
(74) Representative: Notaro, Giancarlo

(56) References cited:
- EP-A2- 0 391 165
- WO-A1-2009/106883
- US-A- 5 908 675
- US-A1- 2012 055 094
- US-A1- 2012 193 013
- US-A1- 2017 122 027
- US-A1- 2018 194 113

## Description

### Field of the invention

The present invention relates to glass plates for motor-vehicle window panes.

In the present description, the term "motor-vehicle window panes" relates to any glass surface of the motor-vehicle, including the windshield, the rear window, the side windows and the roof windows.

More in particular, the invention relates to glass plates for motor-vehicle window panes of the type including two layers of glass with a film of synthetic material (typically polyvinyl butyral, i.e. "PVB") interposed therewith.

### Prior art

The evolution in the design motor cars has brought in recent years to propose solutions in which the glass panes of the motor-vehicle windows have their peripheral edge which, at least along a part of its perimeter, has a portion thereof which is permanently exposed to air and atmospheric agents. This applies either to the windshield or the rear window of the motor-vehicle or the glass panes of the side windows, particularly in the case of so-called frameless door windows, in which the door does not have an upper frame surrounding the window pane when the pane is raised.

In all the above-mentioned solutions, a problem has been found due to the formation of air bubbles on the peripheral portion of the film of synthetic material of the multi-layer glass pane, because of prolonged exposure to air, atmospheric agents and detergents which are used for washing the car.

**A multi-layer glass plate for motor-vehicles having the features of the glass plate described in the preamble of claim 1 is known from document** US 5 908 675 A**. A similar solution is known from** WO 2009/106883 A1**. Solutions of multi-layer glass plates with the peripheral surface of the plate covered by a protective coating are also known from** US 2012/055094 A1**,** EP 0 391 165 A2**,** US 2018/194113 A1 **and** US 2017/122027 A1**.**

### Object of the invention

The object of t/he present invention is that of solving the above-mentioned problem in a simple and inexpensive manner.

### Summary of the invention

In view of achieving the above indicated object, the invention provides a motor-vehicle **having the features of claim 1.**

The protective paint coating can be constituted by a polyurethane or acrylic paint, for example with a "matt" effect and/or a transparent effect. The paint coating can be applied by means of any known technique, such as by spraying, or by means of a dispenser or by means of a brush.

### Detailed description of the invention

Further features and advantages of the invention will become apparent from the description which follows with reference to the annexed drawings given purely by way of non-limiting example, in which:
- figure 1 shows an example of a motor-vehicle provided with side doors having frameless door windows,
- figure 2 shows a detail of the motor-vehicle of figure 1 in order to show the formation of air bubbles along the perimeter of a multi-layer glass plate,
- figure 3 is a diagrammatic view of a glass plate of a side door of the motor-vehicle of figures 1, 2, which shows the principle on which the invention is based, and
- figure 4 is a diagrammatic view and at an enlarged scale and in cross-section of a portion of the multi-layer glass plate according to the invention.

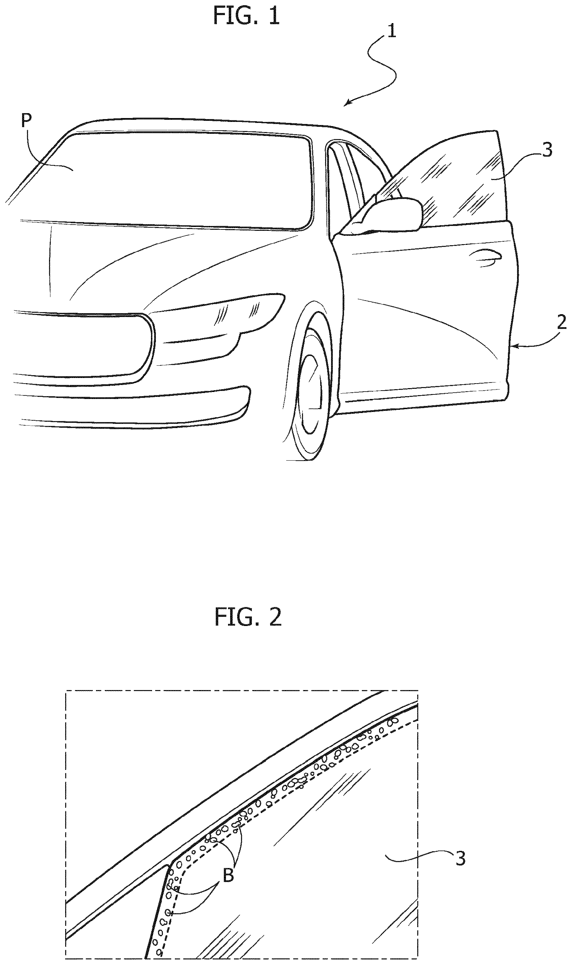

Figure 1 shows a motor-vehicle 1 provided with side doors with frameless windows. Each door 2 has a structure which does not extend above the "belt" line of the motor-vehicle, since it does not include a frame which surrounds the window pane when the latter is raised.

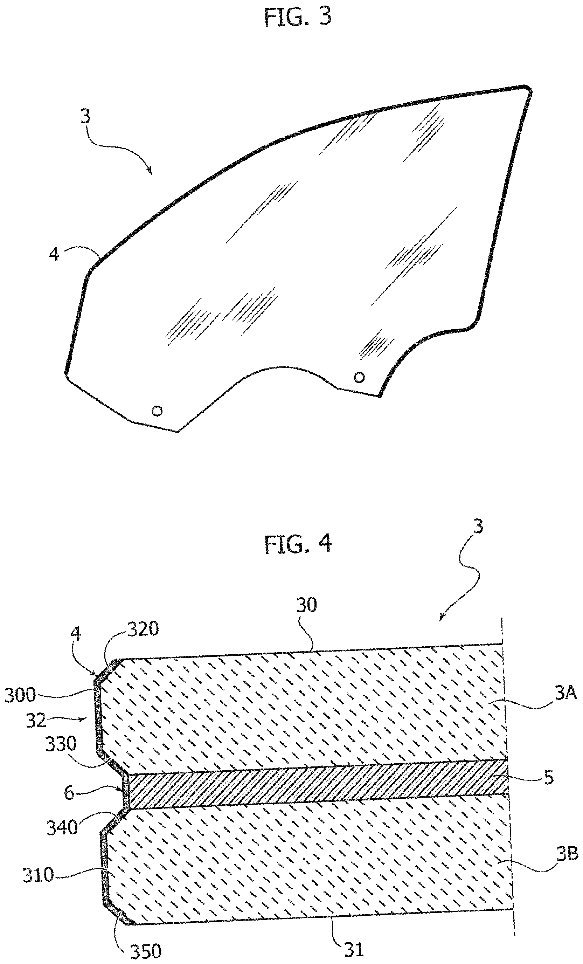

Figure 2 shows a detail of the vertical front edge of the glass pane 3 associated to the door 2 at an enlarged scale. The glass pane 3 has the configuration which is shown by way of example in figure 3 and the multi-layer structure which is shown in figure 4, where the protective paint coating 4 forming the subject of the present invention is also shown.

With reference to figure 4, the glass plate 3 is a multi-layer plate, comprising two glass layers 3A, 3B, with a film of synthetic material 5 (typically made of PVB) interposed between layers 3A, 3B. In an actual embodiment, the glass layers 3A, 3B are soda-lime silicate glasses.

The present description does not enter into the detail of the process for manufacturing the multi-layer glass plate, with regard to obtaining the two layers 3A, 3B with the film 5 of synthetic material interposed therebetween. This process can be performed according to any known technique and does not form part, taken alone, of the scope of the invention.

Also, with reference to figure 4, the multi-layer glass plate 3 has a main outer surface 30, facing towards the outside of the motor-vehicle, a main inner surface 31, facing towards the inside of the motor-vehicle and a peripheral surface 32.

As already indicated in the foregoing, the present invention finds its basis in particular in all those applications in which the peripheral edge 32 of the multi-layer glass plate 3, at least along part of its perimeter, is exposed at least partially to air and atmospheric agents (differently from the solutions in which the edge of the glass plate is completely received inside a guiding weather-strip).

As also indicated in the foregoing, due to this exposure, along the peripheral edge of the glass plate, air bubbles B are formed (shown with enlarged dimensions for clarity in figure 2) which give origin to an unpleasant aesthetical effect.

In order to overcome this drawback, in the present invention, the peripheral edge 32 has, at least along part of its perimeter (in the illustrated example along its entire perimeter) a protective paint coating 4, preferably made of a transparent or matt-like paint such as a polyurethane or acrylic mono-layer paint. In this manner, along the peripheral surface of the multi-layer glass plate 3, the contact area between the film 5 of synthetic material and the two glass layers 3A, 3B (see figure 4) is completely insulated with respect to the outside.

In the actual embodiment which is shown in figure 4, each glass layer 3A, 3B has a peripheral surface 300, 310 connected to both the main faces of each glass layer 3A, 3B through peripheral bevels 320, 330, 340, 350.

As shown in figure 4, the two peripheral bevels 330, 340 adjacent to the film 5 of synthetic material define a continuous peripheral groove 6 along the peripheral edge of the glass pane.

The applied paint coating 4 has a thickness greatly lower than depth of the groove 6, so that, as shown in figure 4, this coating has a substantially uniform thickness, in the order of 0.2 - 0.8 mm and follows the profile of the above-mentioned groove 6.

The protective paint coating is applied by means of any known technique (spray, dispenser, brush) and in the preferred embodiment it extends throughout the entire peripheral surface of the multi-layer glass plate 3, up to the border between the outer bevels 320, 350 and the outer and inner main surfaces 30, 31 of the multi-layer glass plate.

The example illustrated herein relates to a glass pane of a motor-vehicle side door, but the invention is applicable to any glass panel of the motor-vehicle, including the windshield P (figure 1) or the rear window.

Naturally, while the principle of invention remains the same, the details of construction and the embodiments may widely vary with respect to what has been described and illustrated purely by way of example, without departing from the scope of the present invention.

## Claims

1. Motor-vehicle, comprising a windshield, a rear window and side windows, in which at least one of these elements comprises a multi-layer glass plate (3) including two glass layers (3A, 3B) with a film (5) of synthetic material interposed therebetween,
wherein said multi-layer glass plate (3) has an outer main surface (30), facing towards the outside of the motor-vehicle, an inner main surface (31) facing towards the inside of the motor-vehicle, and a peripheral surface (32),
wherein along at least a part of the perimeter of the multi-layer glass plate (3), said peripheral surface (32) has a portion which is permanently exposed to air and atmospheric agents, and
wherein along at least said part of the perimeter of the multi-layer glass plate (3) the peripheral surface (32) of the plate is covered by a paint protective coating (4) which insulates the contact area between said film (5) of synthetic material and the two glass layers (3A, 3B) forming part of the multi-layer glass plate (3) with respect to the outside, and
wherein each of the glass layers (3A, 3B) constituting the multi-layer glass plate (3) has a peripheral surface (300, 310) substantially orthogonal to the main surfaces of each glass layer (3A, 3B) and connected to both said main surfaces of the glass layers (3A, 3B) through peripheral bevels (320, 330, 340, 350) so that the peripheral surface (32) of the multi-layer glass plate (3) has a peripheral groove (6) at the peripheral edge of said film (5) of synthetic material, the thickness of the paint protective coating (4) being lower than the depth of said peripheral groove (6), so that the paint protective coating (4) has a substantially constant thickness and follows the profile of said peripheral groove (6),
the motor-vehicle being **characterized in that**:
- the paint protective coating (4) having a substantially constant thickness covers both said peripheral groove (6) and the remaining portions of the peripheral surfaces of the two glass layers (3A, 3B) up to the border between said outer bevels (320, 350) of the peripheral surfaces and the main outer and inner surfaces (30, 31) of the multi-layer glass plate (3).

2. Motor-vehicle according to claim 1, **characterized in that** the paint protective coating is made of a polyurethane or acrylic paint, with transparent and/or matt effect, applied by a technique selected among spraying, dispenser or brush.

## Patentansprüche

1. Kraftfahrzeug, umfassend eine Windschutzscheibe, eine Heckscheibe und Seitenfenster, wobei wenigstens eines dieser Elemente eine mehrschichtige Glasscheibe (3) mit zwei Glasschichten (3A, 3B) mit einer dazwischen eingefügten Folie (5) aus synthetischem Material umfasst,
wobei die mehrschichtige Glasscheibe (3) eine äußere Hauptfläche (30) besitzt, die zur Außenseite des Kraftfahrzeugs gerichtet ist, eine innere Hauptfläche (31), die zur Innenseite des Kraftfahrzeugs gerichtet ist, und eine Umfangsfläche (32) besitzt,
wobei entlang wenigstens eines Teils des Umfangs der mehrschichtigen Glasscheibe (3) die Umfangsfläche (32) einen Abschnitt besitzt, der permanent Luft und Umwelteinflüssen ausgesetzt ist, und
wobei entlang wenigstens eines Teils des Umfangs der mehrschichtigen Glasscheibe (3) die Umfangsfläche (32) der Scheibe mit einer Lackschutzschicht (4) überzogen ist, welche die Kontaktfläche zwischen der Folie (5) aus synthetischem Material und den beiden Glasschichten (3A, 3B), die Teil der mehrschichtigen Glasscheibe (3) sind, gegenüber der Außenseite isoliert, und
wobei jede der Glasschichten (3A, 3B), die die mehrschichtige Glasscheibe (3) bildet, eine Umfangsfläche (300, 310) hat, die im Wesentlichen orthogonal zu den Hauptflächen jeder Glasschicht (3A, 3B) verläuft, und mit beiden Hauptflächen der Glasschichten (3A, 3B) durch periphere Gehrungen (320, 330, 340, 350) verbunden ist, so dass die Umfangsfläche (32) der mehrschichtigen Glasscheibe (3) an der Umfangskante der Folie (5) aus synthetischem Material eine Umfangsnut (6) besitzt, wobei die Stärke der Lackschutzschicht (4) geringer ist als die Tiefe der Umfangsnut (6), so dass die Lackschutzschicht (4) eine im Wesentlichen konstante Stärke hat und dem Profil der Umfangsnut (6) folgt,
wobei das Kraftfahrzeug **dadurch gekennzeichnet ist, dass**
- die Lackschutzschicht (4) mit einer im Wesentlichen konstanten Stärke sowohl die Umfangsnut (6) als auch die restlichen Abschnitte der Umfangsflächen (32) der beiden Glasschichten (3A, 3B) bis zu dem Rand zwischen den äußeren Gehrungen (320, 350) der Umfangsflächen und die äußeren und inneren Hauptflächen (30, 31) der mehrschichtigen Glasscheibe (3) abdeckt.

2. Kraftfahrzeug nach Anspruch 1, **dadurch gekennzeichnet, dass** die Lackschutzschicht (4) aus Polyurethanlack oder Acryllack mit Transparenteffekt und / oder Matteffekt hergestellt ist, und durch eine Technik, ausgewählt aus Sprühen, Verteilen oder Pinselauftrag, aufgebracht ist.

## Revendications

1. Véhicule automobile, comprenant un pare-brise, une vitre arrière et des vitres latérales, dans lequel au moins l'un de ces éléments comprend une plaque de verre multicouche (3) comprenant deux couches de verre (3A, 3B) avec un film (5) en matière synthétique interposé entre elles,
dans lequel ladite plaque de verre multicouche (3) a une surface principale extérieure (30), tournée vers l'extérieur du véhicule automobile, une surface principale intérieure (31) tournée vers l'intérieur du véhicule automobile et une surface périphérique (32),
dans lequel le long d'au moins une partie du périmètre de la plaque de verre multicouche (3), ladite surface périphérique (32) a une partie qui est exposée de façon permanente à l'air et aux agents atmosphériques, et
dans lequel le long d'au moins ladite partie du périmètre de la plaque de verre multicouche (3) la surface périphérique (32) de la plaque est recouverte d'un revêtement protecteur de peinture (4) qui isole la zone de contact entre ledit film (5) en matière synthétique et les deux couches de verre (3A, 3B) faisant partie de la plaque de verre multicouche (3) par rapport à l'extérieur, et
dans lequel chacune des couches de verre (3A, 3B) constituant la plaque de verre multicouche (3) a une surface périphérique (300, 310) sensiblement orthogonale aux surfaces principales de chaque couche de verre (3A, 3B) et reliée audites deux surfaces principales des couches de verre (3A, 3B) par des biseaux périphériques (320, 330, 340, 350) de sorte que la surface périphérique (32) de la plaque de verre multicouche (3) présente une rainure périphérique (6) au niveau du bord périphérique dudit film (5) en matière synthétique, l'épaisseur du revêtement protecteur de peinture (4) étant inférieure à la profondeur de ladite rainure périphérique (6), de sorte que le revêtement protecteur de peinture (4) présente une épaisseur sensiblement constante et suive le profil de ladite rainure périphérique (6),
le véhicule automobile étant **caractérisé en ce que** :
- le revêtement protecteur de peinture (4) ayant une épaisseur sensiblement constante recouvre à la fois ladite rainure périphérique (6) et les parties restantes des surfaces périphériques des deux couches de verre (3A, 3B) jusqu'à la frontière entre lesdits biseaux extérieurs (320, 350) des surfaces périphériques et les surfaces principales extérieure et intérieure (30, 31) de la plaque de verre multicouche (3).

2. Véhicule automobile selon la revendication 1, **caractérisé en ce que** le revêtement protecteur de peinture est réalisé en une peinture polyuréthane ou acrylique, à effet transparent et/ou mat, appliquée par une technique choisie parmi la pulvérisation, le distributeur ou le pinceau.
